# EUROPEAN PATENT APPLICATION

(11) **EP 0 838 499 A1**
(43) Date of publication of application: **29.04.1998**
(21) Application number: 97202860.9
(22) Date of filing: 17.09.1997
(51) Int. Cl.: C08L 63/00, C08G 59/68, C08K 7/24, C08J 9/32

(54) **Two-part low density curing epoxy composition and use thereof as void filler**

(30) Priority: 28.10.1996 EP 96202983
(71) Applicant: MINNESOTA MINING AND MANUFACTURING COMPANY, St. Paul, Minnesota 55133-3427 (US)
(72) Inventor: Juvin-Pedretti, Valerie, 92506 Rueil-Malmaison Cedex (FR); Jannic, Patrice, 92506 Rueil-Malmaison Cedex (FR); Lamon, Alain, 92506 Rueil-Malmaison Cedex (FR)
(74) Representative: Voortmans, Gilbert J.L.

(57) **Abstract**

The present invention discloses a curable composition comprising an epoxide compound having an epoxide functionality of at least one, at least one epoxide hardener, a metal salt catalyst, inorganic hollow microspheres and a tertiary amine as an accelerator. The curable composition can be readily cured at ambient temperature and is useful in void filling and in particular in aerospace applications. The present invention also provides a kit of parts for preparing the curable composition and to a method for preparing the curable composition.

## Description

### 1. Field of the invention.

The present invention relates to a low density two-part epoxy resin composition that is curable at ambient temperature and the use thereof in aerospace applications, in particular as a void filler.

### 2. Background of the invention.

Low density epoxy resin compositions are well known for use in aerospace applications. For example US 5.019.605 discloses a low density two-part epoxy resin composition that comprises an epoxide compound having at least one epoxy group per molecule, an epoxide hardener such as e.g. a polyamine and a low density filler that can be selected from hollow spheres that can be organic or inorganic and blowing agents. This patent also discloses that an accelerator such as a tertiary amine can be added to the composition. The epoxy compositions disclosed in US 5.019.605 have however the disadvantage of slow curing at ambient temperature. Moreover, they have a poor temperature latitude and the curing reaction also depends on amount of product mixed together. For example small amounts may lead to too long curing times whereas large amounts lead to very short curing times with accompanying loss of product.

These problems are also observed with commercial products that are currently being used on the market and that are based on compositions that include an epoxide compound, a polyamine hardener, 2,4,6-tris(dimethylaminomethyl)phenol as an accelerator and glass microspheres as a void filler.

US 4.704.331 discloses an epoxy type adhesive wherein a combination of a metal salt catalyst yielding an exotherm of at least 20°C and a polymeric toughening agent is used to obtain a rapidly curing epoxy adhesive that has a high peel strength and high lap shear strength. US 4.704.331 further discloses that metal salt catalysts have been known for accelerating the curing of epoxy resins in case the epoxy hardener is a polyamine but that the mechanical properties of the cured product are adversely affected in the absence of a polymeric toughening agent.

EP 471988 discloses an epoxy resin composition that can be rapidely cured at ambient temperature by using an accelerator system that comprises (a) a inorganic nitrate salt, (b) an aliphatic hydroxy compound and an aminophenol compound such as 2,4,6-tris(dimethylaminomethyl)phenol.

### 3. Summary of the invention.

It is an object of the present invention to provide a low density curable composition on the basis of an epoxide compound that when cured has suitable mechanical properties for aerospace application, allows rapid curing at ambient temperature which includes that the reactivity of the composition should not much differ over a temperature range from about 10 to 25°C and shows little dependency of the curing reaction on the amounts mixed.

By the term "low density" in connection with this invention is meant a composition that has a weight/volume (=density) ratio of 1g/cm³ or less.

Further objects of the present invention will become clear from the description hereinafter.

The present invention provides a curable composition comprising an epoxide compound having an epoxide functionality of at least one, at least one epoxide hardener, a metal salt catalyst, inorganic hollow microspheres and an accelerator, said accelerator being a tertiary amine.

The present invention further provides a kit of parts for preparing a curable composition, said kit comprising at least two parts, a first part comprising an epoxide compound having an epoxide functionality of at least one and a second part comprising at least one epoxide hardener, at least one part of said kit further comprising a metal salt catalyst, an accelerator, said accelerator being a tertiary amine and inorganic hollow microspheres.

The present invention also provides a method for filling voids using a curable composition as defined above.

Also provided is a use of the above kit in an aerospace application.

Finally, the present invention provides a method for preparing a curable composition as described above.

### 4. Detailed description of the invention.

It has been found that a curable composition in accordance with the present invention can be readily cured at a temperature range of about 10 to 25°C with practically the same reactivity throughout that temperature range. Furthermore, the curing reaction shows little dependence on the amounts mixed and the obtained mechanical properties allow for use of the curable composition in aerospace applications. In particular in aerospace application it is generally required that the compressive strength of the cured composition at room temperature is at least 12 MPa and at least 1.5 Mpa at 100°C. These requirements can be met by a cured composition in connection with the invention.

Epoxide group containing materials useful in a curable composition in accordance with this invention are preferably glycidyl ether derivatives having an oxirane ring polymerizable by ring opening. Such materials, broadly called glycidyl ether epoxides, include monomeric epoxy compounds and epoxides of the polymeric type.

These epoxide group-containing materials can vary from low molecular weight monomeric materials to high molecular weight polymers and can vary in the nature of their backbone and substituent groups. Illustrative permissible substituent groups include halogens, ethers, and siloxane groups. The molecular weight of the epoxy-containing materials can vary from 50 to about 100,000 or more. Mixtures of various epoxy-containing materials can also be used in the composition of this invention.

Such epoxide group-containing materials are well-known and include such epoxides as glycidyl ether type epoxy resins and the diglycidyl ethers of bisphenol A, F and/or S and of novolak resins, such as described in "Handbook of Epoxy resins" by Lee and Neville, McGraw-Hill Book Co., New York (1967).

Those epoxide group-containing materials which are particularly useful in the practice of this invention include glycidyl ether monomers of the formula 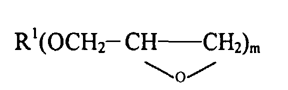 where R¹ is alkyl or aryl and m is an integer of 1 to 6. Examples are the glycidyl ethers of polyhydric phenols obtained by reacting a polyhydric phenol with an excess of chlorohydrin such epichlorodhydrin (e.g., the diglycidyl ether of bisphenol A, i.e., 2-2-bis (2,3-epoxy propoxyphenol)propane).

There are a host of commercially available epoxide group-containing materials which can be used in this invention. In particular, epoxides which are readily available include glycidol, diglycidyl ethers of bisphenol A and/or F (e.g., those available under the trade designations "Epon 828" and "Epikote 232" available from Shell Chemical Co., and "DER-331," "DER-332," and DER-334" available from Dow Chemical Co.), silicone resins containing diglycidyl epoxy functionality, flame retardant epoxy resins (e.g., "DER-580," a brominated bisphenol type epoxy resin available from Dow Chemical Co.), 1-4 butanediol diglycidyl ethers (e.g., "Araldite RD-2" available from Ciba-Geigy), polyglycidyl ethers of phenol formaldehyde novolak (e.g., "DEN-431" and "DEN-438" available from Dow Chemical Co.), and resorcinol diglycidyl ethers (e.g., "Kopoxite" available from Koppers Company, Inc.).

The epoxide hardener useful in compositions of the invention include those conventionally used for curing epoxy resin composition and forming cross-linked polymer networks. Epoxide hardeners are also referred to as curing agents in the art and hereinafter. Particular useful hardeners are amines such as aliphatic or aromatic primary amines. A preferred type of epoxide hardener for use in this invention are amino-terminated aliphatic polyethers. As used herein, the term amino-terminated aliphatic polyether curing agents mean organic materials capable of crosslinking epoxide group-containing materials, having two or more aliphatic backbone units, two or more ether backbone units, and two or more terminal amino groups bearing one or more active hydrogen atoms. These materials may have quaternary atoms and substituents which do not interfere with the ability of the material to crosslink.

A preferred class of amino-terminated aliphatic polyethers are polyether diamine compounds of the general formula

H₂N―R²O(̵R³O)ₙR²―NH₂

wherein:
R² is a linear or branched chain alkylene group having 2 to 4 carbon atoms,
R³ is a hydrocarbolene group having 2 to 8 carbon atoms selected from straight and branched chain alkylene groups having 2 to 4 carbon atoms, cycloalkylene groups having 4 to 8 carbon atoms, and arene groups having 6 to 8 carbon atoms, and
n is a number having a value of 1 to 10 such that the number average molecular weight of the compound is from 175 to 750, preferably 175 to 500.

Examples of useful polyetherdiamines include ethylene ether diamines, such as

H₂NCH₂CH₂CH₂(̵OCH₂CH₂)̵ₓOCH₂CH₂CH₂NH₂

where x is from about 1 to 10, and propylene ether diamines such as

H₂NCH₂CH₂CH₂(̵OCH(CH₃)CH₂ ) _{y}OCH₂CH₂CH₂NH₂

where y is about 1 to 10.

A further preferred class of amino-terminated aliphatic polyethers suitable for use in the present invention are derived from, i.e., prepared from or capable of being prepared or obtained from, polycarboxylic acids and the polyether diamines described above. The resulting amino-terminated aliphatic polyether polyamides, sometimes referred to as "polyetherpolyamides" herein, may be derived from a wide variety of polycarboxylic acids, but particularly preferred are polymeric fatty acids such as dimer fatty acids or mixed dimer and trimer acids. Exemplary of such polymeric fatty acids is "Empol 1022," available from Emery Chemical Co., which is prepared by polymerizing C₁₈ unsaturated fatty acids and has the following characteristics:
- Acid value (mg KOH/gm.): 180
- Saponification value (mg KOH/gm.): 185
- Unsaponifiables: <2.0%
- Neutralization equivalent: 300
- Dimer content, C₃₆: 72%
- Trimer content C₃₄: 22%
- Monomer content: 3%
- Specific gravity at 15.5 °C/15.5 °C: 0.95
- Viscosity at 25° C.: About 10,000 cps

Suitable polyetherpolyamides can also be prepared from shorter-chain polycarboxylic acids, but the cured products of mixtures thereof in epoxy resin compositions have somewhat less flexibility than is obtained when the polyetherpolyamide is derived from polymeric fatty acids. Suitable polyetherpolyamides are further disclosed in U.S. Pat. No. 3,257,342.

In preparing the polyetherpolyamide, the amino-terminated aliphatic polyether is preferably employed in an amount providing at least 1.1 amino groups per carboxyl group of the polycarboxylic acid, and it is preferred to keep the ratio at 1.5:1 or above. The higher the ratio is, up to slightly over 2.1, the easier the reaction is to control. Small amounts of free polyether diamine may be added after the reaction with the polycarboxylic acid is completed in order to adjust the amine equivalent weight for specific requirements.

A chemically effective amount of an aliphatic amino-terminated aliphatic polyether curing agent and/or another curing agent as disclosed above should be used in the epoxy resin composition. Preferably, for 100 parts by weight of epoxide group-containing compound, from about 10 to 200 parts by weight of a curing agent are employed.

Suitable metal salt catalysts for use in connection with this invention are preferably Group I or II metal salts and in particular metal salt catalysts that can yield a strong exotherm. Preferably used are nitrate salts and particularly preferred metal salt catalysts are e.g. a calcium nitrate (hydrated or not), magnesium nitrate etc... Other suitable metal salts are e.g. calcium perchlorate and calcium triflate. A metal catalyst in connection with this invention is preferably used in an amount of 0.5 to 10% by weight and more preferably in an amount between 2% and 3% by weight of a curable composition in connection with this invention.

Suitable accelerators for use in this invention are tertiary amines and in particular phenol compounds having at least two or three dialkylaminoalkyl groups such as e.g. 2,4,6-tris(dimethylaminomethyl)phenol. An accelerator for use in accordance with the present invention is preferably present in an amount of at least 2% by weight and more preferably in an amount of at least 4.5 % by weight of the total weight of a curable composition.

Inorganic hollow microspheres for use as a low density filler in this invention may be selected from a wide variety of materials including, by way of example, glass, ceramic (including sol-gel derived), zirconia, and metal microspheres.

Preferably these microspheres are non-porous and have a diameter in the range of from about 20 to 100 micrometers and a density of less than about 0.5 g/cm³, more preferably one in the range of from about 0.1 to 0.45 g/cm³, and most preferably one of about 0.2 g/cm³.

Specific examples of useful inorganic hollow microspheres are the glass microspheres disclosed in U.S. Pat. Nos. 4,279,632 and 2,978,340, the ceramic microspheres disclosed in U.S. Pat. Nos. 4,421,562 and 4,637,990 and the zirconia-based ceramic microspheres disclosed in U.S. Pat. No. 4,744,831.

An epoxy-based curable compositions in accordance with the present invention preferably comprises between 3% by weight and 40% by weight of inorganic hollow microspheres, more preferably between 10% and 30% by weight. Most preferably, the curable composition in connection with this invention is substantially free of organic hollow microspheres although small amounts thereof can be present.

A curable composition in connection with this invention may further comprise optional ingredients that may be preferably incorporated into the compositions of the invention such as wetting agents, such as those selected from the group consisting of titanates, silanes, zirconates, zircoaluminates, phosphoric ester(s) and mixtures thereof

Other fillers may be incorporated in addition to the inorganic hollow microspheres mentioned above. These may be used to regulate rheological properties of the composition and adjust viscosity to improve processability. These are preferably inorganic fillers, including silica. Especially preferred is hydrophobic fumed silica which is commercially available as Aerosil from Degussa or CAB-O-SIL® from Cabot.

Additionally, a curable composition in connection with this invention may comprise a fire retardant agent and/or a smoke surpressant agent. In case a smoke level is not specified, halogen compounds can be used in combination with antimony oxide. The smoke level can be limited by the use of a smoke surpressant as disclosed in US 5.019.605. In case halogens are of concern in the composition, the following classes of products are being preferred. A first class of flame-retardant agent which can be useful for the epoxy-based curable composition of the present invention comprises inorganic flame-retardant agents such as alumina trihydrate (= aluminum oxide trihydrate, sometimes also referred to as aluminum hydroxide) or other aluminum group metal hydroxides, magnesium hydroxide or other alkaline earth metal hydroxides, calcium carbonate, magnesium carbonate and boron containing compounds such as boric acid, zinc borate or barium or calcium metaborate.

Fire-retardant agents like aluminum group metal hydroxides, alkaline earth metal hydroxides or boric acid which when heated give off water, typically upon decomposition, are often also termed as smoke suppressants.

Epoxy-based curable compositions of the present invention may comprise one or more inorganic flame-retardant agents and, in particular, one or more inorganic smoke suppressants are preferred.

Another class of flame-retardant agents which can be useful in the present invention are melamines, triazines, isocyanurates and urea and guanidin and their derivatives. In a preferred embodiment, a flame-retardant system comprises 1 or 2 N-containing flame-retardant agents.

Another class of flame-retardant agents which can be useful in the present invention are P-containing flame-retardant agents like, for example, elemental red phosphorous, melamine phosphate, dimelamine phosphate and melamine pyrophosphate.

A fire-retardant system for use in an epoxy-based curable composition according to the present invention can furthermore comprise an intumescent component which creates when burned, a foamed char layer, which impedes heat-transfer and may operate as a sealant thus suppressing spreading of fire. Intumescent, fire-retardant components are typically complicated formulations usually comprising a "carbonific" part, i.e. a source of carbon, an acid source and a "spumific" part (or blowing agent) evolving gaseous products which blow the char up into the form of a foam. These functions are usually provided by a system comprising two, three or more compounds (J. Troitzsch, Makromol. Chem., Makromol. Symp., 74 (1993), 125-135, and Ian C. McNeill, Makromol. Chem., Makromol. Symp., 74 (1993), 11-20).

A curable composition in connection with the present invention can be prepared by mixing together the epoxide compound, the epoxide hardener, the metal catalyst, the accelerator and the inorganic hollow microspheres. Conveniently, a curable composition in connection with the present invention is prepared by mixing together a first and second part whereby the epoxide compound is comprised in the first part and the epoxide hardener is comprised in the second part. Preferably, the accelerator and metal catalyst are added to the second part holding the epoxide hardener although it is also possible to add either one or both of them to the first part. Further, either one or both parts may contain the inorganic hollow microspheres. Most preferably, both parts comprise the inorganic hollow microspheres in approximately the same amounts so that different amounts of parts A and B in a mix do not substantially change the amount of inorganic hollow microspheres in the curable composition.

In a particularly preferred embodiment in connection with the present invention there is provided a kit of parts that is particularly suitable in the above method for preparing a curable composition in connection with this invention. Preferably such kit comprises at least two parts, a first part comprising the epoxide compound having an epoxide functionality of at least one and a second part comprising at least one epoxide hardener, at least one part of said kit further comprising the metal salt catalyst, the accelerator and inorganic hollow microspheres. Preferably, the accelerator and metal catalyst are contained in the second part holding the epoxide hardener although it is also possible to add either one or both of them to the first part. A highly preferred kit in connection with this invention consists of two parts, a first part comprising the epoxide compound and a second part comprising the epoxide hardener, the metal salt catalyst and the accelerator and at least one part of the kit further comprising inorganic hollow microspheres. Adding inorganic hollow microspheres to both parts of the kit is particulary preferred in this invention.

The invention is further illustrated by the following examples without the intention to limit the invention thereto.

### EXAMPLES

### Test methods

### Worklife

Samples were prepared by mixing together 100g of part A and 100g of part B (see table below) for 3 minutes and a ball was made therefrom. With a knit needle (3.5mm diameter) the center of the ball was pierced every 3 minutes. The moment at which the center of the ball hardens i.e. when the knit needle can no longer be moved in the ball, was noted and recorded as the worklife time.

### Shore D hardness

Cured products were prepared by mixing together 100g of part A and 100g of part B (see table below) for 3 minutes and putting the obtained mix in a mold having the dimensions 150mm x 150mm x 50mm and allowing it to cure at ambient temperature. Trapping of air should be avoided when filling the mold. After 1.5 hours, 24 and 48 hours samples having a size of 12.5 x 12.5 x 25mm were cut from the obtained blocs. On the thus obtained samples, 5 measurements were made using a Shore D durometer and an average was made therefrom.

### Compressive strength

Samples having a size of 12.5 x 12.5 x 25mm were prepared as described in the above Shore D hardness test. To measure compressive strength the samples were compressed at the rate of 0.1 mm/min using a Zwick Roell Model 1464 Tensile Tester (Zwick GmbH & CO., Ulm, Germany), according to ASTM D695. Compressive strength was measured at 23°C upto 100°C. The samples were preconditioned in the heated equipement for at least 30 minutes before testing when the temperature at which the measurement was carried out differed from ambient temperature.

### List of materials used

- - EPIKOTE™ 232: blend of diglycidyl ether of bisphenol A and diglycidyl ether of bisphenol F, equivalent weight 170, available from Shell Chemicals.
- - Oil blue A: blue pigment available from Dupont de Nemours
- - Hollow glass microspheres: A20/1000 available from 3M Company
- - organic microspheres: organic hollow microspheres of an acrylonitrile co-vinylidene chloride polymer, EXPANCEL™ DE available from Akzo Nobel.
- - silica filler: hydrophobic fumed silica, AEROSIL™ R202, available from Degussa
- - diamine hardener: condensation product of two moles of ethylene ether diamine and one mole of dimer acid EMPOL™ 1022 as disclosed in example 1 of US 4.704.331
- - accelerator: 2,4,6-tris(dimethylaminomethyl)phenol ANCAMINE™ K54 available from Anchor

The following compositions each having a part A and B as set out in table 1 were prepared:

**Table 1**

| | | amounts in parts by weight | | | | |
|---|---|---|---|---|---|---|
| | | I | II | III | IV | V |
| PART A | diamine hardener | 100 | 100 | 100 | 100 | 100 |
| | Ca(NO₃)₂.4H₂O | 8.4 | 11.3 | 8.6 | 9.5 | - |
| | calciumtriflate | - | - | - | - | 8.6 |
| | accelerator | 11.3 | - | 11.3 | 5.8 | 11.3 |
| | silica filler | 6.5 | - | 6.5 | 3.3 | 6.4 |
| | hollow glass microspheres | - | 43.1 | 42.5 | 43.1 | 42.6 |
| | organic microspheres | 6.8 | - | - | - | - |
| PART B | EPIKOTE™ 232 | 100 | 100 | 100 | 100 | 100 |
| | hollow glass microspheres | - | 28.1 | 28.1 | 28.1 | 28.1 |
| | organic microspheres | 4.9 | - | - | - | - |
| | silica filler | 2.22 | 2.25 | 2.21 | 2.25 | 2.21 |
| | Oil blue A | 0.16 | 0.13 | 0.16 | 0.13 | 0.16 |

Parts A and B for each of the above samples were mixed as set out in the test methods. Worklife, Shore D hardness and Compressive strength was determined for each of the samples and the results are set out in table 2. In addition to these samples, a commercially available two-part epoxy resin composition (SCOTCH® WELD 3524 B/A available from 3M Company) and that includes the accelerator and glass microspheres but which did not include a metal salt catalyst was tested (sample VI).

**Table 2**

| Sample number | Worklife (min.) | Shore D hardness after | | | Compressive Strength in MPa at | |
|---|---|---|---|---|---|---|
| | | 90 min. | 24h | 48h | 23°C | 100°C |
| I | 16 | 36 | 42 | 42 | 4.4 | 0 |
| II | 11 | 32 | 40 | 40 | 2.5 | 1 |
| III | 7 | 51 | 51 | 51 | 27.7 | 5.6 |
| IV | 9 | 41 | 50 | 50 | 9.7 | 1.7 |
| V | 16 | 50 | 58 | 58 | 24.3 | 3.6 |
| VI | >90 | <20 | 45 | 50 | 16 | 2 |

From the above table 2 the following can be appreciated. A curable composition that contains organic hollow microspheres (sample I) does not yield the required mechanical properties and in particular the low compressive strength at 100°C indicates that the product is not sufficiently cured. Similarly, in absence of the accelerator the obtained mechanical properties are unacceptable. Also, it can be seen that sample VI which does not include a metal catalyst has a much larger worklife than the other samples and furthermore invention samples III and V have improved mechanical properties compared to sample VI.

## Claims

1. A curable composition comprising an epoxide compound having an epoxide functionality of at least one, at least one epoxide hardener, a metal salt catalyst, inorganic hollow microspheres and an accelerator in amount of at least 4.5% by weight of the curable composition, said accelerator being a tertiary amine.

2. A curable composition according to claim 1 wherein said accelerator is a phenol compound having at least two or three dialkylaminoalkyl groups.

3. A curable composition according to claim 2 wherein said accelerator is 2,4,6-tris(dimethylaminomethyl)phenol.

4. A curable composition according to claim 1 wherein said metal salt catalyst is a Group I or Group II metal salt.

5. A curable composition according to claim 1 wherein said epoxy hardener is an amino-terminated aliphatic polyether and said epoxide compound is a diglycidylether of bisphenol A and/or bisphenol F.

6. A curable composition according to claim 1 wherein said inorganic hollow microspheres are hollow glass spheres.

7. A kit of parts for preparing a curable composition containing an accelerator in an amount of at least 4.5% by weight of the curable composition, said kit comprising at least two parts, a first part comprising an epoxide compound having an epoxide functionality of at least one and a second part comprising at least one epoxide hardener, at least one part of said kit further comprising a metal salt catalyst, inorganic hollow microspheres and said accelerator, said accelerator being a tertiary amine.

8. A kit of parts according to claim 7, said kit consisting of two parts, a first part comprising said epoxide compound and a second part comprising said epoxide hardener, said metal salt catalyst and said accelerator and at least one part of said kit further comprising inorganic hollow microspheres.

9. A kit according to claim 7 wherein said accelerator is a phenol compound having at least two or three dialkylaminoalkyl groups.

10. A kit according to claim 9 wherein said accelerator is 2,4,6-tris(dimethylaminomethyl)phenol.

11. A kit according to claim 7 wherein said metal salt catalyst is a Group I or Group II metal salt.

12. A kit according to claim 7 wherein said epoxy hardener is an amino-terminated aliphatic polyether and said epoxide compound is a diglycidylether of bisphenol A and/or bisphenol F.

13. A kit according to claim 7 wherein said inorganic hollow microspheres are hollow glass spheres.

14. Method of filling voids comprising the steps of providing a curable composition comprising an epoxide compound having an epoxide functionality of at least one, at least one epoxide hardener, a metal salt catalyst, inorganic hollow microspheres and an accelerator, said accelerator being a tertiary amine, filling a void therewith and allowing it to cure at ambient temperature.

15. Method according to claim 14 wherein said accelerator is 2,4,6-tris(dimethylaminomethyl)phenol.

16. Use of a kit of parts for preparing a curable composition for use in an aerospace application, said kit comprising at least two parts, a first part comprising an epoxide compound having an epoxide functionality of at least one and a second part comprising at least one epoxide hardener, at least one part of said kit further comprising a metal salt catalyst, inorganic hollow microspheres and an accelerator, said accelerator being a tertiary amine.

17. Method of preparing a curable composition as defined in any of claims 1 to 6 by mixing together said epoxide compound, said epoxide hardener, said metal catalyst, said accelerator and said inorganic hollow microspheres.

18. A method according to claim 17 wherein said curable composition is prepared by mixing together a first part and second part, said first part comprising an epoxide compound having an epoxide functionality of at least one and said second part comprising at least one epoxide hardener, a metal salt catalyst and an accelerator, said accelerator being a tertiary amine, and said inorganic hollow microspheres being comprised in said first and/or second part.
